(19) Europäisches Patentamt
European Patent Office
Office européen des brevets

(11) **EP 4 039 748 A1**

(12) **EUROPÄISCHE PATENTANMELDUNG**

(43) Veröffentlichungstag:
**10.08.2022   Patentblatt 2022/32**

(21) Anmeldenummer: 22154936.3

(22) Anmeldetag: **03.02.2022**

(51) Internationale Patentklassifikation (IPC):
***C08L 77/02*** *(2006.01)*      ***C08L 77/06*** *(2006.01)*

(52) Gemeinsame Patentklassifikation (CPC):
(C-Sets verfügbar)
**A22C 13/0013; C08L 77/02; C08L 77/06;**
A22C 2013/005; A22C 2013/0063;
A22C 2013/0083; A22C 2013/0089      (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **03.02.2021   DE 102021102502**

(71) Anmelder: **Kalle GmbH
65203 Wiesbaden (DE)**

(72) Erfinder:
• **Delius, Ulrich
  22946 Trittau (DE)**
• **Raskita, Igor
  65183 Wiesbaden (DE)**

(74) Vertreter: **Plate, Jürgen
  Plate Schweitzer Zounek
  Patentanwälte
  Rheingaustrasse 196
  65203 Wiesbaden (DE)**

(54) **RAUCH- UND WASSERDAMPFDURCHLÄSSIGE LEBENSMITTELHÜLLE MIT VERBESSERTER TRANSPARENZ**

(57)      Offenbart ist eine schlauchförmige, nahtlose, bi-axial verstreckte, rauch- und wasserdampfdurchlässige, farblich neutrale und transparente, einschichtige Nahrungsmittelhülle aus einem Gemisch, das 50 bis 95 Gew.-% aliphatisches (Co)Polyamid, 3 bis 40 Gew.-% mindestens eines Vinyl(co)polymers mit Einheiten aus N-Vinyl-2-pyrrolidon und 1,5 bis 7,0 Gew.-% mindestens eines aliphatischen Diols und/oder aliphatisches Polyols umfasst, jeweils bezogen auf das Gewicht des Gemisches, wobei das Diol oder Polyol homogen verteilt ist in einer Matrix aus dem aliphatischen (Co)Polyamid. Die Nahrungsmittelhülle wird durch ein Extrusionsverfahren mit biaxialer Schlauchverstreckung und einer nachfolgenden Thermofixierung hergestellt. Sie ist besonders geeignet als künstliche Wursthülle, speziell für Rohwurst, wie Salami oder Mettwurst.

Processed by Luminess, 75001 PARIS (FR)

**(Forts. nächste Seite)**

(52) Gemeinsame Patentklassifikation (CPC): (Forts.)

C-Sets
**C08L 77/02, C08K 5/053, C08L 39/06;**
**C08L 77/02, C08L 39/06, C08L 71/02;**
**C08L 77/06, C08K 5/053, C08L 39/06;**
**C08L 77/06, C08L 39/06, C08L 71/02**

**Beschreibung**

Die Erfindung betrifft eine Hülle auf Basis von Kunststoff mit hoher Permeabilität für Rauch und Wasserdampf sowie verbesserter Transparenz bzw. Lichtdurchlässigkeit gegenüber Hüllen nach Stand der Technik. Die Hülle besteht im Wesentlichen aus einem oder mehreren aliphatischen (Co-)Polyamid(en), einem Vinylpyrrolidon(co)polymer und mindestens einem aliphatischen Diol und/oder aliphatischem Polyol.

Als Alternative zu Kunstdärmen auf Basis Kollagen und Cellulose sind Hüllen aus synthetischen Polymeren beschrieben (für eine Übersicht siehe z.B. B.-A. Lang, G. Effenberger, Wursthüllen - Kunstdarm, Deutscher Fachverlag GmbH, Frankfurt a.M., 3. Aufl. [2006], S. 62 -70).

Überwiegend bestehen diese Hüllen aus thermoplastischen Kunststoffen, die eine geringe Durchlässigkeit für Wasserdampf aufweisen. Diese Art Hüllen ist verbreitet zur Herstellung von Koch- und Brühwurst. Für getrocknete Rohwurst, wie Salami, sind sie naturgemäß ungeeignet.

In jüngerer Zeit sind auch kunststoffbasierte Hüllen bekannt geworden, die durchlässig für Rauch und Wasserdampf sind.

In der EP 1 380 212 A1 sind verstreckte schlauchförmige Hüllen aus einer Mischung eines Copolyamids (PA6/66 85:15) und eines vernetzten N-Vinylpyrrolidon-Polymers ("PVPP") beschrieben. In den Beispielen dieser Patentanmeldung ist der Anteil des PVPPs an der Mischung variiert von 4 bis 50 Gew.-%. Für die Wasserdampfdurchlässigkeit sind Werte im Bereich 1000 bis ≤ 2000 g /m² 24h angegeben, gemessen bei 40°C und 90% r. F. Zusätzlich ist der Gewichtsverlust von in der Hülle befindlichem Wurstbrät nach 15 Tagen und nach 2 Monaten angegeben. Als Vergleich sind die Werte bei Verwendung einer Cellulose-Faserhülle angegeben. Der Gewichtsverlust der Wurst in der Cellulose-Faserhülle nach 15 Tagen lag wesentlich höher als der bei Hüllen aus Copolyamid und PVPP.

In WO 02/078455 A1 sind Folien für das Räuchern und/oder Trocknen von Lebensmitteln bestehend aus einer Polyamid-Matrix mit einer fein dispergierten hydrophilen Komponente beschrieben. Letztere ist beispielsweise ein (Co)Polymer von N-Vinylpyrrolidon, Vinylalkohol, oder Polyethylenglykol. Die hydrophile Komponente liegt in der Polyamidmatrix in Form von Domänen mit einem Durchmesser von 0,1 - 3 $\mu$m in Folienebene vor. In den Beispielen werden biaxial verstreckte Hüllen mit Wasserdampfdurchlässigkeiten im Bereich von 211 bis 509 g /m² 24h angegeben, gemessen bei 30°C und 65% r. F. Als Vergleich wird eine Kollagenhülle ("Cutisin") mit einer Durchlässigkeit von 1200 g /m² 24h unter gleichen Bedingungen genannt.

In DE 103 02 960 A1 wird eine biaxial orientierte rauchdurchlässige Hülle beansprucht, welche aliphatisches (Co-)Polyamid und mindestens ein wasserlösliches synthetisches Polymer umfasst und eine Wasserdampfdurchlässigkeit im Bereich 40 bis 200 g /m² d aufweist. Das wasserlösliche Polymer ist vzw. ein Polyvinylalkohol, ein Polyalkylenglykol, ein Vinylpyrrolidon(co-)polymer, ein Polymerisat von N-Vinylalkylamiden oder ein (Co-)Polymer mit Einheiten von $\alpha,\beta$-ungesättigten Carbonsäuren bzw. $\alpha,\beta$-ungesättigten Carbonsäureamiden. In den Beispielen werden Hüllen mit Wasserdampfdurchlässigkeiten im Bereich von 81 bis 110 g /m² d genannt, gemessen bei 23°C und 85% r.F. Die in obengenannten Schriften genannten Wasserdampfdurchlässigkeiten wurden unter verschiedenen Klimabedingungen gemessen und sind untereinander nicht vergleichbar. In der oben genannten EP 1 380 212 A1 und der ebenfalls oben genannten WO 02/078455 zeigt die als Vergleich hinzugezogene Cellulose-Faserhülle bzw. Kollagenhülle, dass letztere in der Wasserdampfdurchlässigkeit der jeweils beanspruchten Polyamidbasierten Hülle deutlich überlegen ist.

Gegenstand der DE 103 20 327 A1 ist eine ein- oder mehrschichtige, rauch- und wasserdampfdurchlässige, nahtlos schlauchförmige, biaxial verstreckte Nahrungsmittelhülle mit natürlichem Erscheinungsbild. Sie besteht aus einem thermoplastischen Gemisch, das mindestens ein aliphatisches (Co)Polyamid, mindestens ein wasserlösliches Polymer sowie einen organischen und/oder anorganischen Füllstoff enthält. Das wasserlösliche Polymer ist bevorzugt Polyvinylalkohol, Polyvinylpyrrolidon oder ein Polyalkylenglykol. Der organische Füllstoff ist bevorzugt ein Polysaccharid oder ein Derivat davon, Stärke oder ein Stärkederivat, oder eine organische synthetische Faser bzw. Pulver, vorzugsweise auf Basis von Fluorpolymeren, Polysulfonen, Polyethersulfonen, Polyetherketonen, Polyimiden, wobei die Faserlänge bzw. Korngröße 5 bis 3.000 $\mu$m beträgt. Bevorzugte anorganische Füllstoffe sind Fasern, Kugeln oder Pulver aus Glas, Carbonaten wie Calciumcarbonat, Sulfaten wie Calciumsulfat, aus Silikaten, Kieselgur, Aluminiumhydroxid, Titandioxid oder Siliciumdioxid mit einer Faserlänge bzw. Korngröße von 0,1 bis 3.000 $\mu$m.

In der DE10 2018 201 241 A1 ist eine mindestens zweischichtige, rauch- und wasserdampfdurchlässige, schlauchförmige, nahtlose Nahrungsmittelhülle auf Basis von thermoplastischen Polymeren offenbart. Sie umfasst eine Innenschicht aus einem Blend von aliphatischem oder isocyclischem (Co)Polyamid und einem Polyetheramid, Polyetherester oder Polyetherurethan. Mindestens eine weitere Schicht besteht aus einem Blend aus aliphatischem (Co)Polyamid und mindestens einem hydrophilen Polymer, wie Polyvinylpyrrolidon, Polyvinylalkohol oder einem Polyalkylenglykol. Durch Verändern des Mischungsverhältnisses der Komponenten der Innenschicht lässt sich die Haftung der Hülle an dem Nahrungsmittel gezielt einstellen.

Ein generelles Defizit der obengenannten Hüllen ist ihre mangelhafte Transparenz bzw. begrenzte Lichtdurchlässigkeit. Die Hüllen basieren auf einer Matrix aus Polyamid mit darin dispergierten Teilchen eines hydrophilen bzw. wasserlöslichen Polymers (PVPP, (Co-)Polymer von Vinylpyrrolidon, Co-Polymer von Vinylalkohol etc.). PVPP ist ein vernetztes Polyvinylpyrrolidon und konstitutionsbedingt nicht schmelzbar. Die anderen genannten Polymere sind nicht bzw. nur unter Einschränkungen schmelzbar oder zumindest mit Polyamiden nicht homogen mischbar. Als Konsequenz hieraus liegen die hydrophilen bzw. wasserlöslichen Polymere in der Polyamid-Matrix der Hüllen in Form dispergierter Partikel bzw. Tröpfchen (auch als Domänen zu bezeichnen) vor. In der WO '455 werden Domänen mit einem Durchmesser von 0,1 - 3 $\mu$m spezifiziert.

Dem Fachmann ist bekannt, dass elektromagnetische Wellen (sichtbares Licht entspricht dem Wellenlängen-Bereich von etwa 400 bis 800 nm) an kleinen sphärischen Objekten gestreut werden. Bei Festkörpern mit darin dispergierten Partikeln findet Lichtstreuung an den Partikeloberflächen statt, sofern das Material der Partikel eine von der Matrix abweichende optische Dichte (abweichenden Brechungsindex) aufweist. Dies ist bei signifikanten chemischen Unterschieden zwischen Partikel- und Matrixwerkstoff immer gegeben, also auch im Fall der oben genannten Hüllen.

Komplementär zum Begriff Transparenz werden die Begriffe Opazität, Trübung und Opaleszenz verwendet.

Opazität beruht auf einer Wellenlängen-unabhängigen Lichtstreuung. Dabei wird das Licht in einem weiten Winkelbereich gestreut. Sie tritt auf, wenn die streuenden Partikel größer als die Wellenlänge des eingestrahlten Lichts sind (bei Licht bis an die Grenze zum Infrarot [Wellenlänge bis etwa 800 nm] also größer als 0,8 $\mu$m). Opaleszenz beruht auf einer wellenlängen-abhängigen Streuung in kleinen Winkeln zur Achse des einfallenden Lichts. Sie tritt auf, wenn die streuenden Partikel etwas kleiner als die Wellenlänge des eingestrahlten Lichts sind (bei Licht bis an die Grenze zum Ultraviolett [Wellenlänge ab etwa 400 nm] also kleiner als 0,4 $\mu$m.) Gestreutes Licht tritt dabei bläulich, direkt durchtretendes Licht hingegen rötlich in Erscheinung (s. https://de.wikipedia.org/wiki/Opazit%C3%A4t).

Opazität bei Kunststoffen äußert sich optisch in einer gleichmäßigen weißlichen Trübung. Opaleszenz äußert sich hingegen in einem changierenden, vom Betrachtungswinkel abhängigen Farbeffekt, oftmals auch als Perlmuttglanz bezeichnet.

Daten zur Opaleszenz von Folien sind kaum veröffentlicht. Als optisches Qualitätskriterium bei Folien wird gegebenenfalls nur ein Maß der Opazität angegeben; in der Regel die einfach zu messende Trübung gemäß der Norm ASTM D1003. In dieser Norm ist die Trübung als der prozentuale Teil des durchgelassenen Lichts mit großem Streuwinkel definiert; präziser als der detektierbare Lichtanteil, welcher vom Winkel des eingestrahlten Lichts um mehr als 2,5° [Bogenminuten] abweicht. Da in einer Folie gegebenenfalls enthaltene lichtstreuende Teilchen meist eine breite Größenverteilung haben, erzeugen diese dann sowohl Opaleszenz als auch Opazität bzw. Trübung. Bei Folien mit sehr geringer gemessener Trübung kann man daher unterstellen, dass diese auch geringe Opaleszenz besitzen.

In der WO '455 sind Hüllen mit Domänen (= dispergierte lichtstreuende Partikel) mit einem Durchmesser von 0,1 - 3 $\mu$m Durchmesser spezifiziert. Für die Hüllen gemäß der EP 1 380 212 A1 und DE 103 02 960 A1 sind keine Partikel- bzw. TröpfchenDurchmesser offenbart. Es kann jedoch unterstellt werden. dass deren Durchmesser sich überwiegend oberhalb 0,4 $\mu$m, anteilig auch darunter bewegen. Dadurch erklärt sich der leicht milchige Farbeindruck (Trübung) aller und der Perlmuttglanz (Opaleszenz) zumindest einiger dieser Hüllen.

Der Anwender ist an Wursthüllen interessiert, die dem Verbraucher einen natürlichen Eindruck von Farbe und Textur der Wurstmasse vermitteln. Eine Trübung oder ein opaleszierender Farbeffekt der Hülle ist unerwünscht, da diese für den Verbraucher einen unnatürlichen Eindruck vom Wurstprodukt ergibt oder den Verdacht minderwertiger Ware auslöst.

Es bestand somit die Aufgabe, eine Kunststoffhülle bereitzustellen, welche für Rauch und Wasserdampf eine sehr gute Durchlässigkeit aufweist und gleichzeitig hoch transparent und farblich neutral ist, also eine möglichst geringe Opazität und geringe Opaleszenz aufweist.

Gleichzeitig sollte die Hülle die für die Wurstherstellung geltenden technischen Anforderungen wie Platzfestigkeit, Kochbeständigkeit, Formtreue und Bräthaftung erfüllen.

Die Hülle sollte darüber hinaus kostengünstig und einfach auf thermoplastischem Weg herstellbar sein.

Gelöst wurde die Aufgabe mit einer einschichtigen Folienhülle aus einem Gemisch, das aliphatisches (Co-)Polyamid, mindestens ein Vinyl(co)polymer mit Einheiten aus N-Vinyl-2-pyrrolidon umfasst. Es ist dadurch gekennzeichnet, dass der Anteil des mindestens einen aliphatischen Copolyamids 50 bis 95 Gew.-% und der Anteil des mindestens einen Vinyl(co)polymers 3 bis 40 Gew.-% beträgt, jeweils bezogen auf das Gewicht des Gemisches, und dass das Gemisch zusätzlich 1,5 bis 7,0 Gew.-% mindestens eines aliphatischen Diols und/oderaliphatischen Polyols umfasst, wobei das Diol oder Polyol homogen verteilt ist in einer Matrix aus dem aliphatischen (Co)Polyamid.

Vorzugsweise besteht die erfindungsgemäße Hülle allein aus den genannten Komponenten, so dass sich die einzelnen Gewichtsanteile zu 100 Gew.-% ergänzen. Überraschenderweise wurde gefunden, dass bei thermoplastisch hergestellten Hüllen aus obengenannten Komponenten [bei geeigneter vorheriger Compoundierung] keine diskreten Partikel in der Polyamidmatrix mehr erkennbar und dass die Hüllen dementsprechend hoch transparent sowie farblich neutral sind.

Überraschend wurde gefunden, dass die Transparenz der Hülle wieder abnimmt, wenn der Anteil des aliphatischen Diols und/oder Polyols 7,0 Gew.-%, bezogen auf das Gewicht der Hülle, übersteigt.

Die erfindungsgemäße Nahrungsmittelhülle weist bei einer Dicke von 25 bis 30 $\mu$m im Wellenlängenbereich von 380 bis 780 nm eine Lichtdurchlässigkeit [totale Transmission $\tau_t$] von mindestens 80 %, bevorzugt mindestens 85 %, besonders bevorzugt mindestens 90 %, insbesondere mindestens 92 %, speziell mindestens 94 %, auf, bestimmt gemäß DIN EN ISO 13468-2:2006 mit einem Spektralphotometer.

Die erfindungsgemäße Nahrungsmittelhülle weist bei einer Dicke von 25 bis 30 μm allgemein eine Gesamt-trübung von weniger als 15 %, bevorzugt weniger als 10 %, auf, bestimmt gemäß ASTM D 1003-13, Procedure A (Messung ohne Öl-Immersion). Zur Messung der totalen Transmission gemäß DIN EN ISO 13468-2:2006 wird mit ein Spektralphotometer mit einer stabilisierten Lichtquelle, einem Monochromator, einem Mess- und einem Bezugsstrahl (→ Zweistrahlgerät), einer Integrationskugel (Ulbricht'sche Kugel) und einem Photodetektor verwendet.

Während der Messung wird das Verhältnis $\xi(\lambda)$ der Photodetektorsignale $I_{sam}(\lambda)$ (Probe) zu $I_{ref}(\lambda)$ (Bezugsstrahl) für die eingestellte Wellenlänge $\lambda$ angezeigt:

$$\xi(\lambda) = I_{sam}(\lambda) \, / \, I_{ref}(\lambda)$$

Es werden folgende Ablesungen vorgenommen:

$\xi_1(\lambda)$ ohne Probe über der Eintrittsöffnung der Integrationskugel

$\xi_2(\lambda)$ mit Probe über der Eintrittsöffnung der Integrationskugel

Die Ablesungen werden für den Spektralbereich 380 nm bis 780 nm in Schritten von 5 nm vorgenommen.

Für jede Wellenlänge ergibt sich der totale spektrale Transmissionsgrad $\tau_1(\lambda)$ zu:

$$\tau_1(\lambda) = \xi_2(\lambda) \, / \, \xi_1(\lambda) \qquad \text{(Formel 1)}$$

Die totale Transmission für den gesamten Wellenlängenbereich $\tau_t$ in % errechnet sich wie folgt:

$$\tau_t = \frac{\sum_{\lambda=380\,\text{nm}}^{780\,\text{nm}} \tau(\lambda)\cdot S(\lambda)\cdot V(\lambda)}{\sum_{\lambda=380\,\text{nm}}^{780\,\text{nm}} S(\lambda)\cdot V(\lambda)} \quad [\%] \qquad \text{(Formel} \qquad \text{2)}$$

Dabei ist:

$\tau(\lambda)$     der gemessene totale spektrale Transmissionsgrad gemäß Formel 1

$S(\lambda)$     die Strahlungsfunktion (relative spektrale Energieverteilung der CIE-Normlichtart D65)

$V(\lambda)$     der spektrale Hellempfindlichkeitsgrad (entspricht der Spektralwertsfunktion $\overline{y}(\lambda)$ für Normalbeobachter nach CIE 1931

Der Begriff "(Co-)Polyamid" wird im Zusammenhang mit der vorliegenden Erfindung als Kurzbezeichnung für "Polyamid und/oder Copolyamid" verwendet. Der Begriff "Copolyamid" schließt dabei auch Polyamide mit drei oder mehr verschiedenen Monomer-Einheiten ein.

Von den aliphatischen (Co-)Polyamiden sind Poly(ε-caprolactam), auch bezeichnet als PA 6, Copolyamide aus ε-Caprolactam und ω-Laurinlactam (= PA 6/12), Copolyamide aus ε-Caprolactam, Hexamethylendiamin und Adipinsäure (=PA6/66) sowie Copolyamide aus ε-Caprolactam, 3-Aminomethyl-3,5,5-trimethylcyclohexylamin (Isophorondiamin) und Isophthalsäure bevorzugt. Zu den Copolyamiden werden auch heterofunktionelle Polyamide, insbesondere Polyetheramide, Polyesteramide, Polyetheresteramide und Polyamidurethane gerechnet. Unter diesen Polymeren sind solche mit blockartiger Verteilung der verschiedenen Funktionalitäten, d.h. Blockcopolymere, bevorzugt. Besonders bevorzugte Blockcopolymere sind Poly(ether-block-amide).

Der Anteil des aliphatischen (Co-)Polyamids beträgt allgemein 50 bis 95 Gew.-%, bevorzugt 60 bis 85 Gew.-%, besonders bevorzugt 70 bis 80 Gew.-%, jeweils bezogen auf das Gesamtgewicht des Gemisches.

Der Begriff "Vinyl(co)polymer mit Vinylpyrrolidon-Einheiten" wird im Zusammenhang mit der vorliegenden Erfindung als Kurzbezeichnung für Homo- oder Copolymerisate verwendet, welche durch Polymerisation α,β-ungesättigter aliphatischer Monomere gebildet werden bei denen ein Monomerbaustein stets N-Vinyl-2-pyrrolidon ist. Bevorzugt sind dabei

a) Polyvinylpyrrolidon (Homopolymer aus N-Vinyl-2-pyrrolidon),

b) Copolymere aus N-Vinyl-2-pyrrolidon und einem oder mehreren Vinylestern, insbes. Vinylacetat

c) Copolymere aus N-Vinyl-2-pyrrolidon und einem oder mehreren Estern oder Amiden $\alpha,\beta$-ungesättigter Carbonsäuren, insbes. Methylacrylat und Acrylamid

d) Copolymere aus N-Vinyl-2-pyrrolidon und N-Vinyl-imidazol

Von diesen Gruppen sind a) und d) besonders bevorzugt.

Der Anteil dieser Komponente(n) im Gemisch beträgt allgemein 3 bis 40 Gew.-%, bevorzugt 8 bis 25 Gew.-%, besonders bevorzugt 10 bis 20 Gew.-%.

Der Begriff "Diol" steht für eine aliphatische Verbindung mit zwei freien Hydroxygruppen, beispielsweise Ethylenglykol, 1,2-Propandiol, 1,4-Butandiol, Diethylenglykol, Polyethylenglykol, Poly(1,2-propandiol) (=Polypropylenglykol) und Copolymere aus Ethylenglykol und 1,2-Propandiol bzw. aus Ethylenglykol und 1,4-Butandiol.

Bevorzugt hiervon sind Polyethylenglykol sowie Copolymere aus Ethylenglykol und 1,2-Propandiol.

Der Begriff "Polyol" steht für eine aliphatische Verbindung mit drei oder mehr freien Hydroxygruppen, beispielsweise Glycerin, Diglycerin, 1,1,1-Trimethylolpropan, 2,2-Bis-hydroxymethyl-1,3-propandiol (Pentaerythrit), weiterhin Zuckeralkohole wie Erythrit, Sorbit und Mannit.

Bevorzugt hiervon ist Glycerin. Allgemein bevorzugt sind Diole und Polyole mit 2 bis 20 Kohlenstoffatomen, insbesondere solche mit 2 bis 12 Kohlenstoffatomen.

Der Anteil des mindestens einen Diols und/oder Polyols beträgt allgemein 1,5 bis 7,0 Gew.-%, bevorzugt 1,6 bis 6 Gew.-%, besonders bevorzugt 1,7 bis 5,5 Gew.-%, jeweils bezogen auf das Gesamtgewicht des Gemisches.

Optional können in dem Gemisch noch kleinere Anteile weiterer Polymere enthalten sein, z.B. teilaromatische (Co-)Polyamide und (Co-)Polymere aus bzw. mit Einheiten von $\alpha,\beta$-ungesättigten Carbonsäuren oder $\alpha,\beta$-ungesättigten Carbonsäureamiden, insbesondere mit Einheiten von (Meth)acrylsäure und/oder (Meth)acrylamid.

Der Anteil an optionalen weiteren Polymeren im Gemisch beträgt allgemein 0 bis 20 Gew.-%, bevorzugt 1 bis 15 Gew.-%, besonders bevorzugt 2 bis 10 Gew.-%, bezogen auf das Gesamtgewicht des thermoplastischen Gemisches. Gegebenenfalls enthält das Gemisch zusätzlich bei Raumtemperatur feste, flüssige oder lösliche Additive, welche die Eigenschaften der Hülle weiter beeinflussen. Dadurch lässt sich z.B. die Blockneigung, die Haptik, das Feuchtespeichervermögen oder das Abschälverhalten gezielt einstellen. In Frage kommen dafür beispielsweise Polysaccharide und feindisperse anorganische Füllstoffe, insbesondere Antiblock-und Farbpigmente, weiterhin Plastifizier- und Compoundierhilfsmittel wie Mono-, Di-und Triester von Glycerin mit Carbonsäuren, Formamid, Acetamid, N,N-Dimethylformamid, N,N-Dimethylacetamid, außerdem übliche Kunststoff-Stabilisatoren.

Der Anteil an gegebenenfalls vorhandenen sonstigen Additiven beträgt allgemein 0 bis 10 Gew.-%, bevorzugt 0,5 bis 8 Gew.-%, besonders bevorzugt 1 bis 5 Gew.-%, bezogen auf das Gesamtgewicht des Gemisches.

Gegenstand der Erfindung ist auch ein Verfahren zur Herstellung der erfindungsgemäßen Nahrungsmittelhülle. Die Herstellung erfolgt allgemein durch Extrusionsverfahren, die dem Fachmann an sich bekannt sind.

Zunächst wird das zu extrudierende Gemisch durch Schmelzecompoundierung in einem hierfür geeigneten Gerät, vorzugsweise einem Zweischneckenkneter (auch Doppelwellenextruder genannt) mit angeschlossener Lochdüse, Luftkühlstrecke und Granulator hergestellt. Das auf diese Weise erhaltene Granulat wird in einem weiteren Extruder wieder aufgeschmolzen und dann zu einer schlauchförmigen Hülle verarbeitet.

Nach dem Aufschmelzen in dem weiteren Extruder wird das Gemisch nochmals homogenisiert und plastifiziert. Die Schmelze wird dann durch eine Ringdüse extrudiert. Dabei bildet sich ein Primärschlauch mit einer relativ hohen Wandstärke. Der Primärschlauch wird anschließend rasch abgekühlt, um den amorphen Zustand der Polymere einzufrieren. Anschließend wird er dann wieder auf die zum Verstrecken erforderliche Temperatur erwärmt, beispielsweise auf etwa 80 °C. Verstreckt wird der Schlauch dann in Längs- und in Querrichtung, was vorzugsweise in einem Arbeitsgang durchgeführt wird. Die Längsverstreckung wird üblicherweise mit Hilfe von 2 Quetschwalzenpaaren mit steigender Antriebsgeschwindigkeit vorgenommen; die Querverstreckung erfolgt durch einen von innen auf die Wände des Schlauches wirkenden Gasdruck. Das Flächenstreckverhältnis (das ist das Produkt aus Längs- und Querstreckverhältnis) beträgt allgemein etwa 6 bis 18, bevorzugt etwa 8 bis 11.

Nach dem Verstrecken wird der Schlauch vorzugsweise noch thermofixiert. Damit lassen sich die gewünschten Schrumpfeigenschaften exakt einstellen. Nach der Thermofixierung verbleibt ein Restschrumpf von allgemein weniger als 20 % in Längs- und Querrichtung, gemessen an einer Probe, die 1 min lang in Wasser von 90 °C eingelegt wurde. Schließlich wird der Schlauch abgekühlt, flachgelegt und aufgewickelt.

Die fertige Nahrungsmittelhülle weist vorzugsweise einen Durchmesser von 12 bis 60 mm, besonders bevorzugt einen Durchmesser von 15 bis 50 mm auf.

In einer besonderen Ausführungsform wird der Schlauch anschließend verkranzt. Dazu wird der Schlauch aufgeblasen, einseitig erwärmt (in der Regel berührungslos durch Strahlungshitze) und dann in erwärmtem Zustand gebogen, so dass er eine ring- oder spiralförmige Form annimmt. Verfahren und Vorrichtungen zum Verkranzen sind dem Fachmann allgemein bekannt und auch in der Patentliteratur beschrieben.

**Beispiele**

Die nachfolgenden Beispiele dienen der Erläuterung, ohne jedoch limitierenden Charakter für den Umfang der Erfindung zu haben. Prozente sind Gewichtsprozente, soweit nicht anders angegeben oder aus dem Zusammenhang ersichtlich.

Folgende Ausgangsmaterialien wurden eingesetzt:

Aliphatische Polyamide (PA):

PA1:   Polyamid 6/66 mit einer relativen Viskosität von 3,4 (gemessen in 96 %iger Schwefelsäure) und eine Kristallit-Schmelztemperatur von 192 °C (gemessen per DSC)

PA2:   Copolyamid aus e-Caprolactam, 3-Aminomethyl-3,5,5-trimethyl-cyclohexylamin (Isophorondiamin) und Isophthalsäure mit einer Schmelze-Volumenfließrate (MVR) von 5 cm$^3$/10min (gemessen bei 235°C unter einer Last von 2,16 kg) und einem Kristallit-Schmelzpunkt von 212°C Vinyl(co-)polymere mit Vinylpyrrolidon-Einheiten (Vinylpyrrolidon(co-)polymere):

VP1:   Polyvinylpyrrolidon mit einem K-Wert von 25 und einem mittleren Molekulargewicht $M_w$ von 34.000 Dalton

VP2   Copolymer aus N-Vinyl-2-pyrrolidon und Vinylacetat (Verhältnis 60:40) mit einem K-Wert von 30-50 und einem Molekulargewicht $M_w$ von 51.000 Dalton

Wasserlösliches Polymer nach Stand der Technik:

WP1   Polyvinylalkohol, mit einem Molekulargewicht $M_w$ von 11.000 Da und einem Verseifungsgrad von 88 %

Diol bzw. Polyol:

Diol      Polyethylenglykol (PEG) mit einer mittleren Molmasse von 400

Polyol     Glycerin 96 %ig, Reinheit gemäß DAB (Deutsches Arzneimittelbuch)

Zur Charakterisierung der Hüllen verwendete Messgrößen

Trübung     gemessen gemäß ASTM D 1003 mit einem Trübungsmessgerät im Wellenlängenbereich 400-700 nm (ohne Öl-Immersion → Gesamt-Trübung) (Byk-Gardner, Modell Haze-gard plus)

$\tau_t$      = totale Lichttransmission, gemessen gemäß DIN EN ISO 13468-2:2006 an 26 bis 30 $\mu$m dicken Folien im Wellenlängenbereich 380 bis 780 nm mit einem Spektralphotometer mit Integrationskugelaufsatz 150 nm (Agilent, Modell Cary 5000)

WTR     = Wasserdampfdurchlässigkeit, gemessen nach DIN 53122 bei einer einseitigen Beaufschlagung von Proben mit Luft von 85% relativer Feuchte und bei 23°C [g/m$^2$. d]

Beispiele 1 bis 5: Herstellung von Compounds aus aliphatischem Copolyamid, Vinylpyrrolidon(co-)polymer und Diol bzw. Polyol (erfindungsgemäß)

In einem Zweischnecken-Extruder (Hersteller Coperion, Schneckendurchmesser 25 mm) mit Einloch-Austrittsdüse wurden über drei diskret angeordnete Dosiervorrichtungen sequenziell die in Tabelle 1 aufgeführten Komponenten zugeführt. Die Dosiergeschwindigkeiten [Masse pro Zeiteinheit] standen zueinander im Verhältnis entsprechend den in der Tabelle angegebenen Prozentwerten. Der Extruder war an der Zuführungsstelle des Polyamids auf 180°C temperiert. Bei den anschließenden Gehäusezonen wurde die Temperierung schrittweise bis auf maximal 230°C erhöht. Die Schneckendrehzahl betrug etwa 200 U/min. Auf diese Weise wurde das Polyamid aufgeschmolzen und mit dem pulverförmigen Vinylpyrrolidon(co-)polymer sowie dem Diol bzw. Polyol zu einem homogenen Gemisch plastifiziert. Das Gemisch trat über die Lochdüse aus dem Extruder als wasserklarer, gleichförmiger Strang aus. Der Strang wurde zur Abkühlung durch ein Wasserbad geführt und mittels eines Stranghäckslers anschließend zu Granulatkörnern zerkleinert. Das Granulat wurde im Umluft-Trockner bei etwa 100°C getrocknet.

Tabelle 1: Komponenten der Compounds in den Beispielen 1 bis 5

| Beispiel | aliphatisches Polyamid | Vinylpyrrolidon-(co-)polymer | Diol bzw. Polyol |
|---|---|---|---|
| 1 | PA1 77,3 Gew.-% | VP1 21 Gew.-%. | Diol 1,7 Gew.-% |
| 2 | PA2 77,3 Gew.-% | VP1 21 Gew.-%. | Diol 1,7 Gew.-% |
| 3 | PA1 73,8 Gew.-% | VP1 21 Gew.-%. | Polyol 5,2 Gew.-% |
| 4 | PA1 77,3 Gew.-% | VP2 21 Gew.-% | Diol 1,7 Gew.-% |
| 5 | PA1 75,5 Gew.-% | VP2 21 Gew.-% | Polyol 2,7 Gew.-% |

Beispiel V1: Nachstellung von WO02/078455 A1, Beispiel 1 (nächstgelegener Stand der Technik)

Vorbemerkung

Beispiel 3 der WO '455 besagt, dass eine Mischung der Komponenten PA6.66 [= PA6/66] (90 Gew.-%, Ultramid C35, BASF) [angegeben wurde "94 Gew.-%" - hier liegt offenkundig ein Schreibfehler vor] und Polyvinylpyrrolidon (10 Gew.-%, "Poviden" [Typ nicht spezifiziert], BASF) in einen Extruder eingefüllt und geschmolzen wird. Die Schmelze soll dann (direkt) durch eine Ringdüse extrudiert und zu einem Primärschlauch geformt werden. Es wird nicht ausgeführt, welche Art von Extruder zum Einsatz kam und auf welche Weise besagte Komponenten dem Extruder zugeführt wurden. Im Bereich der Extrusionstechnik versteht man unter Mischungen gemeinhin sogenannte "Dryblends", die durch einfaches mechanisches Vormischen der Komponenten bei Raumtemperatur hergestellt werden. Dryblends können einem Extruder i.d.R. nach einfachem Verfahren, z.B. mittels eines aufgesetzten Trichters zugeführt werden.

Dementsprechend wurden zunächst 90 Gew.-% granuläres PA1 [PA6/66] und 10 Gew.-% pulverförmiges VP1 [Polyvinylpyrrolidon] in eine Mischtrommel gegeben und dort für ca. 30 Minuten intensiv umgewälzt. Das entstandene Pulver-Granulat-Gemisch wurde über einen üblichen Aufgabetrichter einem Einschnecken-Extruder zugeführt, welcher auf ein Temperaturprofil aufsteigend von 160°C bis 235°C temperiert war. Es zeigte sich sofort, dass das Gemisch nicht gleichmäßig und in den vorgegebenen Anteilsmengen vom Extruder aufgenommen wurde. Die Polyvinylpyrrolidon-Partikel sedimentierten zwischen den wesentlich größeren PA6/66-Granulatkörnern hindurch, so dass der Anteil Polyvinylpyrrolidon im Extruder anfänglich wesentlich höher war als dem Mischungsanteil entsprechend. Durch Aufnahme von Umgebungsfeuchtigkeit durch die hygroskopischen Polyvinylpyrrolidon-Partikel kam es überdies zu Agglomeration und Verklebung von Pulverteilchen am Trichtergrund und schließlich zum Verstopfen der Extruderöffnung. Es musste dazu übergegangen werden, die Komponenten mit Hilfe eines Zweischnecken-Extruders, welcher getrennte Zuführung und Dosierung der Komponenten vorsieht, zu compoundieren.

Beispiel V1a Nachstellung von WO 02/078455 A1, Beispiel 1 (geändertes Verfahren)

Es wurden 90 Gew.-% PA1 [granuläres PA6/66] und 10 Gew.-% VP1 [pulverförmiges Polyvinylpyrrolidon] mittels Zweischnecken-Extruder unter den gleichen Bedingungen compoundiert, wie für Beispiele 1 bis 5 beschrieben. Anders als bei diesen Beispielen trat aus der Lochdüse des Extruders diesmal ein deutlich trüber Strang aus.

Beispiel V2: Herstellung eines Compounds analog Beispielen 1 bis 5, ohne Zusatz von Diol oder Polyol

Aus 89 Gew.-% PA1 und 21 Gew.-% VP1 wurde unter den gleichen Bedingungen, wie für Beispiele 1 bis 5 beschrieben, ein weiterer Compound hergestellt.

Vergleichsbeispiel V3: Nachstellung von DE 103 02 960 A1, Beispiel 1 (nächstgelegener Stand der Technik)

In einem Rührkessel mit Mantel-Flüssigkeitsheizung und wandgängigem Rührer wurden bei Raumtemperatur 75 Gew.-% WP1 vorgelegt. Unter Rühren bei ca. 1000/min wurden zunächst 15 Gew.-% Diol und anschl. 7,5 Gew.-% Polyol sowie 2,5 Gew.-% Wasser zugesetzt. Der Kesselinhalt wurde auf 100 bis 110°C erwärmt, 15min bei dieser Temperatur gerührt und unter weiterem Rühren wieder auf 30 bis 40°C abgekühlt. Das resultierende Pulver wurde per Dosiervorrichtung in einen beheizten Zweischneckenextruder (Eigenschaften wie unter Beispielen 1 bis 5 beschrieben) dosiert. Die Schneckendrehzahl betrug 250/min, die Heizungen waren auf Temperaturen von 120°C (Aufgabestelle) stromabwärts bis auf 180°C steigend (Düse) eingestellt. Der austretende Strang wurde auf einer Luftkühlstrecke abgekühlt und anschließend mittels Stranghäcksler zu Granulatkörnern zerteilt.

Vergleichsbeispiele V4 bis V9: Herstellung von Compounds analog Beispiel 1, mit Zusätzen an Diol und/oder Polyol unterhalb von 1,5 bzw. oberhalb von 7,0 Gew.-% (nicht erfindungsgemäß)

Aus den in Tabelle 2 aufgeführten Komponenten wurde mittels Zweischnecken-Extruder unter den gleichen Bedingungen, wie für Beispiele 1 bis 5 beschrieben, weitere Compounds hergestellt.

Tabelle 2: Komponenten der Compounds von Beispielen V4 bis V9

| Beispiel Nr. | aliphatisches Polyamid | Vinylpyrrolidon-(co-)polymer | Diol | Polyol |
|---|---|---|---|---|
| V4 | PA1 78,0 Gew.-% | VP1 21 Gew.-%. | 1,0 Gew.-% | --- |
| V5 | PA1 71,0 Gew.-% | VP1 21 Gew.-%. | 8,0 Gew.-% | --- |
| V6 | PA1 71,0 Gew.-% | VP1 21 Gew.-%. | --- | 8,0 Gew.-% |
| V7 | PA1 71,0 Gew.-% | VP1 21 Gew.-%. | 2,8 Gew.-% | 5,2 Gew.-% |
| V8 | PA1 69,0 Gew.-% | VP1 21 Gew.-% | 3,5 Gew.-% | 6,5 Gew.-% |
| V9 | PA1 67,5 Gew.-% | VP1 21 Gew.-% | 4,5 Gew.-% | 7,0 Gew.-% |

Beispiele 6 bis 10

Herstellung biaxial verstreckter Schlauchhüllen Die gemäß Beispielen 1 bis 5 erhaltenen Granulate wurden (ohne weitere Zusätze) über einen Aufgabetrichter dem Einschnecken-Extruder einer handelsüblichen Extrusions- und Schlauchstreckanlage (Double-Bubble-Anlage mit Mono-Ringdüse) zugeführt. Im Extruder wurde das Granulat aufgeschmolzen, plastifiziert und in Richtung der Düse gefördert. In der Düse wurde der Schmelzestrom axial durch Verteilungskanäle, die in einem ringförmigen Austrittspalt mündeten, gepresst. Der aus dem Spalt austretende Schmelzefilm wurde mittels eines Kalibrators zu einem Primärschlauch mit 13 mm Durchmesser geformt und dabei auf Raumtemperatur abgekühlt. Anschließend wurde der Primärschlauch wieder auf ca. 80°C erwärmt und mittels eines eingebrachten Luftpolsters in Quer- und in Längsrichtung verstreckt. Die Verstreckverhältnisse betrugen etwa 3,30 in Quer- und etwa 1,95 in Längsrichtung. Der verstreckte Schlauch wurde durch Quetschwalzen geführt, anschließend mit einem zweiten Luftpolster beaufschlagt und durch einen mit IR-Strahlern bestückten Fixierkanal geführt. Dabei erreichte der Schlauch eine Oberflächentemperatur von ca. 150°C. Schließlich wurde der Schlauch erneut abgequetscht, im flachliegenden Zustand gekühlt und aufgewickelt. Die entstandene Hülle hatte einen Durchmesser von 43 mm und eine Foliendicke im Bereich 26 bis 30 $\mu$m.
Die Prüfergebnisse der Hüllen sind in Tabelle 3 dargestellt.

Tabelle 3: Daten der erfindungsgemäßen Hüllen

| Beispiel Nr. | zur Herstellung eingesetztes Granulat | Foliendicke (gemittelt über Umfang) [μm] | WTR [g/m$^2$ d] | Trübung [%] | $\tau_t$ [%] |
|---|---|---|---|---|---|
| 6 | gemäß Beispiel 1 | 26 | 320 | 8,2 | 87,6 |
| 7 | gemäß Beispiel 2 | 30 | 370 | 7,0 | 92,1 |
| 8 | gemäß Beispiel 3 | 28 | 360 | 2,9 | 94,5 |
| 9 | gemäß Beispiel 4 | 29 | 260 | 9,1 | 85,0 |
| 10 | gemäß Beispiel 5 | 28 | 280 | 9,4 | 82,7 |

Vergleichsbeispiel V10: Hülle gemäß WO 02/078455 A1, Beispiel 3 (geändertes Herstellverfahren)

Das gemäß Beispiel V1a erhaltene Granulat wurde (ohne weitere Zusätze) dem Extruder der in Beispielen 6 bis 10 beschriebenen Extrusions- und Schlauchstreckanlage zugeführt und unter den gleichen Bedingungen zu einer biaxial verstreckten Hülle verarbeitet.

Vergleichsbeispiel V11: Hülle analog Beispielen 6 und 8, ohne Diol oder Polyol

Das gemäß Beispiel V2 hergestellte Compound wurde (ohne weitere Zusätze) dem Extruder der in Beispielen 6 bis 10 beschriebenen Extrusions- und Schlauchstreckanlage zugeführt und unter den gleichen Bedingungen zu einer biaxial verstreckten Hülle verarbeitet.

Beispiel V12: Hülle gemäß DE 103 02 960 A1, Beispiel 2

Das Granulat gemäß Beispiel V3 wurde mit granulärem PA1 im Verhältnis 30 zu 70 Gewichtsteilen vorgemischt. Das Gemisch wurde dem unter Beispielen 6 bis 10 beschriebenen Extruder zugeführt, darin zu einer homogenen Schmelze plastifiziert und unter den genannten Bedingungen ebenfalls zu einer biaxial verstreckten Schlauchhülle verarbeitet.

Vergleichsbeispiele V13 bis V18: Hüllen analog Beispielen 6 und 8, mit Anteilen an Diol und/oder Polyol von weniger als 1,5 oder mehr als 7,0 Gew.-%

Die Granulate gemäß Beispielen V4 bis V9 wurden (ohne weitere Zusätze) dem Extruder der in Beispielen 6 bis 10 beschriebenen Extrusions- und Schlauchstreckanlage zugeführt und unter den gleichen Bedingungen zu biaxial verstreckten Hüllen verarbeitet.

Tabelle 4: Daten der Hüllen aus den Vergleichsbeispielen V10 bis V18

| Beispiel Nr. | zur Herstellung eingesetztes Granulat | Foliendicke (gemittelt über Umfang) [μm] | WTR [g/m$^2$ d] | Gesamttrübung [%] | $\tau_t$ [%] |
|---|---|---|---|---|---|
| V10 | gemäß Beispiel V1a | 26 | 170 | 16,3 | 76,4 |
| V11 | Gemäß Beispiel V2 | 27 | 310 | 18,1 | 73,1 |
| V12 | 30 Gew.-% gemäß Beispiel V3 70 Gew.-% PA1 | 25 | 90 | 28,5 | 47,5 |
| V13 | gemäß Beispiel V4 | 26 | 310 | 11,8 | 78,0 |
| V14 | gemäß Beispiel V5 | 24 | 330 | 14,5 | 79,8 |
| V15 | gemäß Beispiel V6 | 25 | 370 | 13,2 | 78,3 |
| V16 | gemäß Beispiel V7 | 26 | 340 | 13,8 | 77,5 |
| V17 | gemäß Beispiel V8 | 24 | 370 | 17,6 | 72,1 |
| V18 | gemäß Beispiel V9 | 25 | 380 | 22,1 | 61,4 |

Beispiele 6 und 8 (die alle drei das gleiche Copolyamid und 21 Gew.-% Anteil PVP enthielten) zeigte unmittelbar den trübungs-vermindernden Effekt des Diols bzw. Polyols in der erfindungsgemäßen Hülle auf. Die Beispiele V13 bis V18 zeigen, dass Anteile an Diol und/oder Polyol außerhalb des Bereichs von 1,5 Gew.-% bis 7,0 Gew.-% wieder zu einem signifikanten Anstieg des Trübungswertes und einem Die Hüllen gemäß den Vergleichsbeispielen V10 bis V12 zeigten gegenüber den Hüllen nach den erfindungsgemäßen Beispielen 6 bis 10 signifikant höhere Trübungs- und niedrigeren Transmissionswerte. Dies belegt die Überlegenheit der erfindungsgemäßen Hüllen in Bezug auf die Transparenz (und damit auch geringer Opaleszenz) gegenüber dem Stand der Technik. Der Vergleich der Trübungs- und der Transmissionswerte der Hülle gemäß dem Vergleichsbeispiel V11 mit denen der erfindungsgemäßen Abfall des Transparenzwertes gegenüber den erfindungsgemäßen Hüllen führen.

**Patentansprüche**

1. Schlauchförmige, nahtlose, biaxial verstreckte, rauch- und wasserdampfdurchlässige, farblich neutrale und transparente, einschichtige Nahrungsmittelhülle aus einem Gemisch, das aliphatisches (Co)Polyamidund mindestens ein Vinyl(co)polymer mit Einheiten aus N-Vinyl-2-pyrrolidon umfasst, **dadurch gekennzeichnet, dass** der Anteil des mindestens einen aliphatischen (Co)Polyamids 50 bis 95 Gew.-% und der Anteil des mindestens einen Vinyl(co)polymers 3 bis 40 Gew.-% beträgt, jeweils bezogen auf das Gewicht des Gemisches, und dass das Gemisch zusätzlich 1,5 bis 7,0 Gew.-%, bezogen auf dessen Gewicht, mindestens eines aliphatischen Diols und/oder aliphatischen Polyols umfasst, wobei das Diol oder Polyol homogen verteilt ist in einer Matrix aus dem aliphatischen (Co)Polyamid.

2. Nahrungsmittelhülle gemäß Anspruch 1, **dadurch gekennzeichnet, dass** das aliphatische (Co)Polyamid Poly($\epsilon$-caprolactam) (PA6), ein Copolyamid aus $\epsilon$-Caprolactam und $\omega$-Laurinlactam (PA 6/12), ein Copolyamid aus $\epsilon$-Caprolactam, Hexamethylendiamin und Adipinsäure (PA6/66) oder ein Copolyamid aus $\epsilon$-Caprolactam, 3-Amino-3,5,5-trimethyl-cyclohexylamin (Isophorondiamin) und Isophthalsäure ist.

3. Nahrungsmittelhülle gemäß Anspruch 1 oder 2, **dadurch gekennzeichnet, dass** der Anteil des aliphatischen (Co)Polyamids 60 bis 85 Gew.-%, bevorzugt 70 bis 80 Gew.-%, beträgt, jeweils bezogen auf das Gewicht des Gemisches.

4. Nahrungsmittelhülle gemäß einem oder mehreren der Ansprüche 1 bis 3, **dadurch gekennzeichnet, dass** das aliphatische Diol Ethylenglykol, Propan-1,2-diol, Butan-1,4-diol, Diethylenglykol, ein Polyethylenglykol, bevorzugt mit bis zu 20 Ethylenglykol-Einheiten, ein Polypropylenglykol (= Poly(propan-1,2-diol), ein Copolymer aus Ethylenglykol und Propan-1,2-diol, ein Copolymer aus Ethylenglykol und Butan-1,4-diol oder ein Gemisch aus zwei oder mehr der genannten Verbindungen ist.

5. Nahrungsmittelhülle gemäß einem oder mehreren der Ansprüche 1 bis 4, **dadurch gekennzeichnet, dass** das aliphatische Polyol eine Verbindung mit 3 oder mehr freien Hydroxygruppen ist, wobei die Verbindung bevorzugt nicht mehr als 20 Kohlenstoffatome enthält, besonders bevorzugt Glycerin, Diglycerin, 1,1,1-Trimethylol-propan, 2,2-Bis-hydroxymethyl-propan-1,3-diol (= Pentaerythrit) oder ein Zuckeralkohol, bevorzugt Erythrit, Sorbit oder Mannit, ist.

6. Nahrungsmittelhülle gemäß einem oder mehreren der Ansprüche 1 bis 5, **dadurch gekennzeichnet, dass** der Anteil des Diols und/oder Polyols 1,6 bis 6,0 Gew.-%, bevorzugt 1,7 bis 5,5 Gew.-%, jeweils bezogen auf das Gewicht des Gemisches, beträgt.

7. Nahrungsmittelhülle gemäß einem oder mehreren der Ansprüche 1 bis 6, **dadurch gekennzeichnet, dass** das Vinyl(co)polymer mit Einheiten aus N-Vinyl-2-pyrrolidon

   - Polyvinylpyrrolidon,
   - ein Copolymer aus oder mit Einheiten von N-Vinyl-2-pyrrolidon und einem oder mehreren Vinylester(n), bevorzugt Vinylacetat,
   - ein Copolymer aus oder mit Einheiten von N-Vinyl-2-pyrrolidon und einem oder mehreren Estern oder Amiden $\alpha,\beta$-ungesättigter Carbonsäuren, bevorzugt Methylacrylat und Acrylamid, oder
   - ein Copolymer aus Einheiten von N-Vinyl-2-pyrrolidon und N-Vinyl-imidazol ist.

8. Nahrungsmittelhülle gemäß einem oder mehreren der Ansprüche 1 bis 7, **dadurch gekennzeichnet, dass** der Anteil des Vinyl(co)polymers mit Einheiten aus N-Vinyl-pyrrolidon 8 bis 25 Gew.-%, bevorzugt 10 bis 20 Gew.-%, beträgt.

9. Nahrungsmittelhülle gemäß einem oder mehreren der Ansprüche 1 bis 8, **dadurch gekennzeichnet, dass** sie teilweise thermofixiert ist und einen Restschrumpf weniger als 20 % in Längs- und Querrichtung aufweist, gemessen nach Eintauchen und Lagern der Nahrungsmittelhülle in 90 °C heißem Wasser für 1 Minute.

10. Nahrungsmittelhülle nach einem oder mehreren der Ansprüche 1 bis 9, **dadurch gekennzeichnet, dass** sie eine Wandstärke von 10 bis 50 $\mu$m, bevorzugt von 15 bis 40 $\mu$m, aufweist.

11. Nahrungsmittelhülle nach einem oder mehreren der Ansprüche 1 bis 10, **dadurch gekennzeichnet, dass** sie eine Wasserdampfdurchlässigkeit von 200 bis 500 g/m$^2$ d, bevorzugt von 250 bis 400 g/m$^2$ d, aufweist, bestimmt gemäß DIN 53 122 bei einer einseitigen Beaufschlagung einer Probe der Nahrungsmittelhülle mit Luft von 85 % relativer Feuchte bei einer Temperatur von 23 °C.

12. Nahrungsmittelhülle gemäß einem oder mehreren der Ansprüche 1 bis 11, **dadurch gekennzeichnet, dass** sie eine Gesamttrübung von weniger als 10 % aufweist, bestimmt gemäß ASTM D 1003-6113, Procedure A, ohne Öl-Immersion.

13. Nahrungsmittelhülle gemäß einem oder mehreren der Ansprüche 1 bis 12, **dadurch gekennzeichnet, dass** sie eine totale Lichttransmission von mindestens 80 %, bevorzugt mindestens 85 %, besonders bevorzugt mindestens 90 % aufweist, bestimmt gemäß DIN EN ISO 13468-2:2006 an einer Hülle mit einer Dicke von 25 bis 30 $\mu$m im Wellenlängenbereich von 380 bis 780 nm mit einem Spektralphotometer.

14. Verfahren zur Herstellung einer Nahrungsmittelhülle gemäß einem oder mehreren der Ansprüche 1 bis 13, **dadurch gekennzeichnet, dass** das aliphatisches (Co)Polyamid, das mindestens ein Vinyl(co)polymer mit Einheiten aus N-Vinyl-2-pyrrolidon und das mindestens eine aliphatische Diol und/oder aliphatische Polyol durch Schmelzecompoundierung in eine homogene Schmelze umgewandelt, extrudiert und zu einem Granulat verarbeitet wird, erneutes Aufschmelzen des Granulats und Extrudieren der Schmelze zu einem Primärschlauch mit einer relativ hohen Wandstärke, rasches Abkühlen des Primärschlauchs um den amorphen Zustand der Polymere zu erhalten, Erwärmen des Primärschlauchs auf eine für die biaxiale Verstreckung erforderliche Temperatur und Verstrecken des Primärschlauchs in Längs- und Querrichtung durch einen von Innen wirkenden Gasdruck, wobei das Flächenstreckverhältnis im Bereich von 1 : 6 bis 1 : 12, bevorzugt im Bereich von 1 : 8 bis 1 : 10, liegt.

15. Verwendung der Nahrungsmittelhülle gemäß einem oder mehreren der Ansprüche 1 bis 13 als künstliche Wursthülle, insbesondere für Rohwurst, speziell für geräucherte Rohwurst.

**Europäisches Patentamt**
**European Patent Office**
**Office européen des brevets**

# EUROPÄISCHER RECHERCHENBERICHT

**Nummer der Anmeldung**

**EP 22 15 4936**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/322393 A1 (SAVIC ZORAN [AT] ET AL) 30. Oktober 2014 (2014-10-30) | 1-15 | INV. C08L77/02 C08L77/06 |
| Y | * Seite 5, Absatz [0107]; Beispiel 1 * * Anspruch 1 * * Absatz [0042] * | 6 | |
| | ----- | | |
| X | US 2006/188615 A1 (WILFER ROBERT [DE] ET AL) 24. August 2006 (2006-08-24) | 1-5,7-15 | |
| Y | * Seite 4; Beispiel 1 * * Absatz [0025] * | 6 | |
| | ----- | | |
| X | US 2004/062889 A1 (BORODAEV SERGEI VASILIEVICH [RU] ET AL) 1. April 2004 (2004-04-01) * Seite 4; Beispiel 3 * * Ansprüche 1, 3 * * Absatz [0015] * * Beispiel 1 * | 1-15 | |
| | ----- | | |

**RECHERCHIERTE SACHGEBIETE (IPC)**

**C08L**

Der vorliegende Recherchenbericht wurde für alle Patentansprüche erstellt

| Recherchenort | Abschlußdatum der Recherche | Prüfer |
|---|---|---|
| **München** | **28. Juni 2022** | **Wohnhaas, Christian** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 15 4936

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2022

| Im Recherchenbericht angeführtes Patentdokument | Datum der Veröffentlichung | Mitglied(er) der Patentfamilie | Datum der Veröffentlichung |
|---|---|---|---|
| US 2014322393 A1 | 30-10-2014 | KEINE | |
| US 2006188615 A1 | 24-08-2006 | BR      PI0412324 A | 05-09-2006 |
| | | DE      10330762 A1 | 10-02-2005 |
| | | EP       1646501 A1 | 19-04-2006 |
| | | ES       2574582 T3 | 20-06-2016 |
| | | MX     PA06000298 A | 18-04-2006 |
| | | PL       1646501 T3 | 31-10-2016 |
| | | RU       2345535 C2 | 10-02-2009 |
| | | US     2006188615 A1 | 24-08-2006 |
| | | WO     2005002848 A1 | 13-01-2005 |
| US 2004062889 A1 | 01-04-2004 | AU     2002338285 A1 | 15-10-2002 |
| | | CN       1461189 A | 10-12-2003 |
| | | CZ       20032938 A3 | 14-01-2004 |
| | | DE       10295683 T5 | 22-04-2004 |
| | | ES       2232316 A1 | 16-05-2005 |
| | | PL        362934 A1 | 02-11-2004 |
| | | RU       2182107 C1 | 10-05-2002 |
| | | TR       200301597 T2 | 22-01-2007 |
| | | UA         74611 C2 | 16-01-2006 |
| | | US     2004062889 A1 | 01-04-2004 |
| | | WO       02078455 A1 | 10-10-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1380212 A1
- WO 02078455 A1
- DE 10302960 A1

- WO 02078455 A
- DE 10320327 A1
- DE 102018201241 A1

**In der Beschreibung aufgeführte Nicht-Patentliteratur**

- **B.-A. LANG ; G. EFFENBERGER.** Wursthüllen - Kunstdarm. Deutscher Fachverlag GmbH, 2006, 62-70